(19) Europäisches Patentamt / European Patent Office / Office européen des brevets

(11) **EP 4 738 921 A1**

(12) **EUROPEAN PATENT APPLICATION**
published in accordance with Art. 153(4) EPC

(43) Date of publication:
**06.05.2026 Bulletin 2026/19**

(21) Application number: **23949446.1**

(22) Date of filing: **24.08.2023**

(51) International Patent Classification (IPC):
*H04W 28/10* (2009.01)

(52) Cooperative Patent Classification (CPC):
**H04W 28/10**

(86) International application number:
**PCT/CN2023/114717**

(87) International publication number:
**WO 2025/039261 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• XU, Chen
  Shenzhen, Guangdong 518129 (CN)
• ZHANG, Gongzheng
  Shenzhen, Guangdong 518129 (CN)
• WANG, Jian
  Shenzhen, Guangdong 518129 (CN)
• LI, Rong
  Shenzhen, Guangdong 518129 (CN)

(74) Representative: **Gill Jennings & Every LLP**
**The Broadgate Tower**
**20 Primrose Street**
**London EC2A 2ES (GB)**

(54) **DATA PROCESSING METHOD AND APPARATUS**

(57) A data processing method and an apparatus are disclosed. In the method, a first apparatus can associate data streams with identifiers, allowing a data receive end or a data transmit end to distinguish between different data streams based on the identifiers. In addition, a training unit of the first apparatus can distinguish between the different data streams based on different identifiers when performing AI training, so that the data streams can be trained by sharing parameters, for example, reusing a same neural network processing method.

A first apparatus determines one or more data streams, where each data stream corresponds to one or more identifiers — S101

The first apparatus inputs the one or more data streams and identifiers corresponding to the one or more data streams into a training unit, to obtain output information — S102

FIG. 2

EP 4 738 921 A1

**Description**

TECHNICAL FIELD

This application relates to the field of communication technologies, and in particular, to a data processing method and an apparatus.

BACKGROUND

Currently, artificial intelligence (artificial intelligence, AI) technologies can be applied to various aspects of mobile communication network's physical layer (such as channel encoding and decoding, channel prediction, receiver machines, and so on). For example, for physical-layer AI research, in multiple-input multiple-output (multiple-input multiple-output) scenarios, convolutional neural networks (convolutional neural network, CNN) can be used to design receiver machines. For example, in pilot-less MIMO transmission, to lower neural network complexity and improve generalization/scalability, same parameters may be reused across different layers of the neural network. However, this prevents a receive end from distinguishing data from different streams, thereby limiting training/inference performance of the neural network.

SUMMARY

This application provides a data processing method and an apparatus. The method can be used to distinguish between multi-layer data streams processed by reusing a same neural network.

According to a first aspect, this application provides a data processing method. The method is performed by a first apparatus. The first apparatus is a data transmit end (for example, a transmitter machine). For example, for uplink transmission, the first apparatus may be a terminal, or may be a component (for example, a processor, a chip, or a chip system) of a terminal, or may be a logical module that can implement all or a part of functions of a terminal. For another example, for downlink transmission, the first apparatus may be a network device, or may be a component (for example, a processor, a chip, or a chip system) of a network device, or may be a logical module that can implement all or a part of functions of a terminal. The first apparatus determines one or more data streams, where each data stream corresponds to one or more identifiers. The first apparatus inputs the one or more data streams and identifiers corresponding to the one or more data streams into a training unit, to obtain output information, where the training unit includes one or more artificial intelligence AI modules for signal processing in the transmitter machine.

In the method, the first apparatus is the data transmit end, and can associate data streams with identifiers, so that a data receive end (for example, a receiver machine) can distinguish between different data streams based on the identifiers. In addition, the training unit of the first apparatus can distinguish between the different data streams based on different identifiers when performing AI training, so that the data streams can be trained by sharing parameters (for example, reusing a same neural network processing method). This helps improve generalization and scalability of a network.

In a possible implementation, one data stream includes a plurality of symbols, and each symbol corresponds to one identifier. For example, it is assumed that one data stream includes M symbols, the M symbols respectively correspond to M identifiers (for example, the M symbols and the M identifiers are in a one-to-one correspondence), and the M identifiers form an identifier sequence. It may be referred to that each data stream corresponds to one identifier sequence. The M identifiers are M different identifiers, and M is a positive integer.

In a possible implementation, one data stream includes a plurality of symbols, and a part or all of the plurality of symbols correspond to one identifier. For example, it is assumed that one data stream includes M symbols, and some (it is assumed that there are N symbols, where N is a positive integer less than M) or all (namely, the M symbols) of the M symbols correspond to one identifier. M is a positive integer. Optionally, some or all of other symbols in the M symbols except the N symbols may correspond to another identifier, and the identifier is different from the identifier corresponding to the N symbols.

In a possible implementation, different data streams correspond to different identifiers.

In the foregoing method, each symbol of one data stream corresponds to one identifier, or some or all symbols in one data stream may correspond to one identifier, and different data streams correspond to different identifiers. This helps distinguish the data streams.

In a possible implementation, the first apparatus separately concatenates each data stream with a corresponding identifier to obtain a concatenated vector, where a dimension of the concatenated vector is determined based on a quantity of data streams and a quantity of symbols of each data stream. The first apparatus inputs the concatenated vector into the training unit.

In the method, a method for associating a data stream with an identifier may be specifically directly performing concatenation to obtain a concatenated vector. A dimension of the concatenated vector is related to a quantity of data streams and a quantity of symbols of each data stream. The training unit may train the data stream (an input is a concatenated vector) by sharing parameters. This helps improve generalization and scalability of the network.

In a possible implementation, the first apparatus separately concatenates each data stream with a corresponding identifier to obtain a concatenated vector, where a dimension of the concatenated vector is determined based on a quantity of data streams and a quantity of symbols of each data stream. The first apparatus performs dimension increase on the concatenated vector to obtain a high-dimensional vector; and inputs the high-dimensional vector into the training unit.

In the method, a method for associating a data stream with an identifier may be specifically directly performing concatenation to obtain a concatenated vector, and then performing dimension increase on the concatenated vector to obtain a high-dimensional vector. This helps the training unit perform feature extraction and/or signal processing in high-dimensional space.

In a possible implementation, the first apparatus performs dimension increase on a data stream to obtain a high-dimensional vector, where a dimension of the high-dimensional vector is determined based on a quantity of data streams and a quantity of symbols of each data stream. The first apparatus performs a first operation on the high-dimensional vector and the one or more identifiers, and inputs a result of the first operation into the training unit. For example, the result of the first operation includes data streams with identifiers, and the data streams are also a high-dimensional vector.

In this method, a method for associating a data stream with an identifier may be specifically first performing dimension increase on a data stream to obtain a high-dimensional vector, and then performing a first operation (for example, an addition, subtraction, multiplication, division, or a concatenation operation) on the high-dimensional vector and an identifier to obtain a result (which is also a high-dimensional vector) of the first operation. The training unit may train the data stream (an input is a high-dimensional vector) by sharing parameters. This helps improve generalization and scalability of the network.

In a possible implementation, the one or more identifiers are determined based on a pseudo-random sequence, and the pseudo-random sequence is related to one or more of a cell identity, a user identifier, and an index of the data stream.

In the method, identifiers may be generated by reusing a pseudo-random sequence generation method in a new radio NR protocol, and a parameter in the pseudo-random sequence generation method is improved, so that the generated identifiers can accurately identify different data streams. This helps distinguish between different data streams.

In a possible implementation, the index of the data stream is indicated by using downlink control information DCI.

In the method, for uplink transmission, if the first apparatus is the data transmit end (namely, the terminal), the first apparatus may receive the index, of the data stream, indicated by using the DCI. For another example, for downlink transmission, if the first apparatus is the data transmit end (namely, a base station), the first apparatus knows the index of the data stream, and no indication is required.

In a possible implementation, the one or more identifiers are determined based on a complex sequence or a real sequence, and the complex sequence or the real sequence is determined based on a random sequence and a mapping relationship. The mapping relationship includes a first mapping relationship between a plurality of complex identifiers and a plurality of index values, and/or a second mapping relationship between a plurality of real identifiers and a plurality of index values. The random sequence is determined based on a user identifier and/or an index of the data stream, and a value in the random sequence is an index value in the first mapping relationship and/or an index value in the second mapping relationship.

In the method, identifiers may be generated by using values in a random sequence as index values in a mapping relationship, and the corresponding identifiers are determined by searching for the index values in the mapping relationship.

In a possible implementation, the first apparatus determines a random sequence based on a user identifier and/or an index of the data stream, and a value in the random sequence is an index value in a mapping relationship. The mapping relationship includes a first mapping relationship between a plurality of complex identifiers and a plurality of index values, and/or a second mapping relationship between a plurality of real identifiers and a plurality of index values. The first apparatus searches, based on the value in the random sequence, the mapping relationship for a complex identifier or a real identifier, in the mapping relationship, corresponding to the value in the random sequence, to obtain a complex sequence or a real sequence. The first apparatus determines the one or more identifiers based on the complex sequence or the real sequence, for example, determines the complex identifier in the complex sequence as the one or more identifiers.

In a possible implementation, a largest value in the random sequence is a largest index value in the first mapping relationship or the second mapping relationship.

In a possible implementation, the first mapping relationship or the second mapping relationship is predefined by the first apparatus, or is obtained through radio resource control RRC configuration.

In a possible implementation, the one or more identifiers are determined based on a first function relationship, and a parameter of the first function relationship is related to one or more of a quantity of data streams, a maximum quantity of supported streams, a maximum dimension of the identifier, a dimension index of the identifier, and a user identifier.

In the method, the identifiers may be generated based on the first function relationship, and the parameter of the first function is designed to be related to the data stream. This helps distinguish between different data streams.

In a possible implementation, the first function relationship satisfies the following formula:

$$r(l, n_{RNTI}, i) = cos\left(\frac{l}{M^{\frac{i}{d}}} + \left(2\pi \times M^{\frac{i}{d}}\right)\frac{n_{RNTI}}{2^{16}}\right) + j\sin\left(\frac{l}{M^{\frac{i}{d}}} + \left(2\pi \times M^{\frac{i}{d}}\right)\frac{n_{RNTI}}{2^{16}}\right),$$

where

$r(l, n_{RNTI}, i)$ includes the one or more identifiers, $l$ represents the quantity of data streams, $d$ represents the maximum dimension of the identifier, $i$ represents the dimension index of the identifier, $M$ represents the maximum quantity of supported streams, $n_{RNTI}$ represents the user identifier, $cos$ represents a cosine function, and $sin$ represents a sine function.

In a possible implementation, the one or more identifiers belong to an identifier sequence of the data transmit end, or the one or more identifiers belong to an identifier sequence of the data receive end; and there is a correspondence between the identifier sequence of the data transmit end and the identifier sequence of the data receive end.

In a possible implementation, the data transmit end sends the output information, where the output information is input to the data receive end after being transmitted through a channel; or the data receive end sends the output information, where the output information of the data receive end is used by the data receive end and the data transmit end to update respective training units.

According to a second aspect, this application provides a data processing method. The method is performed by a second apparatus. The second apparatus is a data receive end (for example, a receiver machine). For example, for uplink transmission, the second apparatus may be a network device, or may be a component (for example, a processor, a chip, or a chip system) of a network device, or may be a logical module that can implement all or a part of functions of a network device. For another example, for downlink transmission, the second apparatus may be a terminal, or may be a component (for example, a processor, a chip, or a chip system) of a terminal, or may be a logical module that can implement all or a part of functions of a terminal. The second apparatus determines one or more data streams, where each data stream corresponds to one or more identifiers. The second apparatus inputs the one or more data streams and identifiers corresponding to the one or more data streams into a training unit, to obtain output information, where the training unit includes one or more artificial intelligence AI modules for signal processing in the receiver machine.

In the method, the second apparatus is the data receive end, and can associate received data streams with identifiers, so that the data receive end can distinguish between different data streams based on the identifiers. In addition, the training unit of the second apparatus can

distinguish between the different data streams based on different identifiers when performing AI training, so that the data streams can be trained by sharing parameters (for example, reusing a same neural network processing method). This helps improve generalization and scalability of a network.

Optionally, for other possible implementations of the data processing method performed by the second apparatus, refer to the possible implementations of the first aspect. Details are not described herein again.

According to a third aspect, this application provides a data processing method. The method is performed by a first apparatus or a second apparatus. The first apparatus is a data transmit end, and the second apparatus is a data receive end. For example, for uplink transmission, the first apparatus may be a terminal, or may be a component (for example, a processor, a chip, or a chip system) of a terminal, or may be a logical module that can implement all or a part of functions of a terminal; and the second apparatus may be a network device, or may be a component (for example, a processor, a chip, or a chip system) of a network device, or may be a logical module that can implement all or a part of functions of a network device. For another example, for downlink transmission, the first apparatus may be a network device, or may be a component (for example, a processor, a chip, or a chip system) of a network device, or may be a logical module that can implement all or a part of functions of a terminal; and the second apparatus may be a terminal, or may be a component (for example, a processor, a chip, or a chip system) of a terminal, or may be a logical module that can implement all or a part of functions of a terminal. The first apparatus is used as an example for description. The first apparatus determines one or more data streams. The first apparatus determines, based on a pseudo-random sequence, one or more identifiers corresponding to a data stream, where the pseudo-random sequence is related to one or more of a cell identity, a user identifier, and an index of the data stream.

In the method, the first apparatus may determine the one or more data streams, and improve a parameter in a pseudo-random sequence generation method based on the pseudo-random sequence generation method, so that generated identifiers can accurately identify different data streams. This helps distinguish between the different data streams.

In a possible implementation, the first apparatus determines the pseudo-random sequence based on one or more binary sequences.

In the method, the first apparatus may reuse a method that is described in an NR protocol and that is for determining a pseudo-random sequence based on binary sequences (for example, a real binary sequence and/or a complex binary sequence). This facilitates implementation.

According to a fourth aspect, this application provides a data processing method. The method is performed by a first apparatus or a second apparatus. The first apparatus is a data transmit end, and the second apparatus is a data receive end. For example, for uplink transmission, the first apparatus may be a terminal, or may be a component (for example, a processor, a chip, or a chip system) of a terminal, or may be a logical module that can implement all or a part of functions of a terminal; and the second apparatus may be a network device, or may be a component (for example, a processor, a chip, or a chip system) of a network device, or may be a logical module that can implement all or a part of functions of a network device. For another example, for downlink transmission, the first apparatus may be a network device, or may be a component (for example, a processor, a chip, or a chip system) of a network device, or may be a logical module that can implement all or a part of functions of a terminal; and the second apparatus may be a terminal, or may be a component (for example, a processor, a chip, or a chip system) of a terminal, or may be a logical module that can implement all or a part of functions of a terminal. The first apparatus is used as an example for description. The first apparatus determines a random sequence based on a user identifier and/or an index of the data stream. A value in the random sequence is an index value in a mapping relationship. The mapping relationship includes a first mapping relationship between a plurality of complex identifiers and a plurality of index values, and/or a second mapping relationship between a plurality of real identifiers and a plurality of index values. The first apparatus searches, based on the value in the random sequence, the mapping relationship for a complex identifier or a real identifier, in the mapping relationship, corresponding to the value in the random sequence, to obtain a complex sequence or a real sequence. The first apparatus determines one or more identifiers based on the complex sequence or the real sequence.

In the method, identifiers may be generated by using values in a random sequence as index values in a mapping relationship, and the corresponding identifiers are determined by searching for the index values in the mapping relationship.

In a possible implementation, a largest value in the random sequence is a largest index value in the first mapping relationship or the second mapping relationship.

In a possible implementation, the first mapping relationship or the second mapping relationship is predefined by the first apparatus, or is obtained through radio resource control RRC configuration.

According to a fifth aspect, this application provides a data processing method. The method is performed by a first apparatus or a second apparatus. The first apparatus is a data transmit end, and the second apparatus is a data receive end. For example, for uplink transmission, the first apparatus may be a terminal, or may be a component (for example, a processor, a chip, or a chip system) of a terminal, or may be a logical module that can implement all or a part of functions of a terminal; and the second apparatus may be a network device, or may be a component (for example, a processor, a chip, or a chip system) of a network device, or may be a logical module that can implement all or a part of functions of a network device. For another example, for downlink transmission, the first apparatus may be a network device, or may be a component (for example, a processor, a chip, or a chip system) of a network device, or may be a logical module that can implement all or a part of functions of a terminal; and the second apparatus may be a terminal, or may be a component (for example, a processor, a chip, or a chip system) of a terminal, or may be a logical module that can implement all or a part of functions of a terminal. The first apparatus is used as an example for description. The first apparatus determines one or more data streams. The first apparatus determines, based on a first function relationship, one or more identifiers corresponding to a data stream.

In the method, the identifiers may be generated based on the first function relationship, and the first apparatus may design a parameter of the first function to be related to the data stream. This helps distinguish between different data streams.

In a possible implementation, the first function relationship satisfies the following formula:

$$r(l, n_{RNTI}, i) = cos\left(\frac{l}{M^{\frac{i}{d}}} + \left(2\pi \times M^{\frac{i}{d}}\right)\frac{n_{RNTI}}{2^{16}}\right) + j \sin\left(\frac{l}{M^{\frac{i}{d}}} + \left(2\pi \times M^{\frac{i}{d}}\right)\frac{n_{RNTI}}{2^{16}}\right),$$

where

$r(l, n_{RNTI}, i)$ includes the one or more identifiers, $l$ represents a quantity of data streams, $d$ represents a maximum dimension of the identifier, $i$ represents a dimension index of the identifier, $M$ represents a maximum quantity of supported streams, $n_{RNTI}$ represents a user identifier, $cos$ represents a cosine function, and $sin$ represents a sine function.

According to a sixth aspect, this application provides a communication apparatus. The communication apparatus may be a terminal, or may be an apparatus of a terminal, or may be an apparatus that can be used together with a terminal. In a possible implementation, the communication apparatus may include a functional module. The functional module may be implemented by a hardware circuit, software, or a combination of a hardware circuit and software.

In a possible implementation, the communication apparatus includes a processing unit. The processing unit is configured to determine one or more data streams, where each data stream corresponds to one or more identifiers. The processing unit is further configured to input the one or more data streams and identifiers corresponding to the one or more data streams into a training unit, to obtain output information, where the training unit includes one or more artificial intelligence AI modules for signal processing in a transmitter machine.

In a possible implementation, one data stream includes a plurality of symbols, and each symbol corresponds to one identifier. For example, it is assumed that one data stream includes M symbols, the M symbols respectively correspond to M identifiers (for example, the M symbols and the M identifiers are in a one-to-one correspondence), and the M identifiers form an identifier sequence. It may be referred to that each data stream corresponds to one identifier sequence. The M identifiers are M different identifiers, and M is a positive integer.

In a possible implementation, one data stream includes a plurality of symbols, and a part or all of the plurality of symbols correspond to one identifier. For example, it is assumed that one data stream includes M symbols, and some (it is assumed that there are N symbols, where N is a positive integer less than M) or all (namely, the M symbols) of the M symbols correspond to one identifier. M is a positive integer. Optionally, some or all of other symbols in the M symbols except the N symbols may correspond to another identifier, and the identifier is different from the identifier corresponding to the N symbols.

In a possible implementation, different data streams correspond to different identifiers.

In a possible implementation, the processing unit is configured to separately concatenate each data stream with a corresponding identifier to obtain a concatenated vector, where a dimension of the concatenated vector is determined based on a quantity of data streams and a quantity of symbols of each data stream. The processing unit is further configured to input the concatenated vector into the training unit.

In a possible implementation, the processing unit is configured to separately concatenate each data stream with a corresponding identifier to obtain a concatenated vector, where a dimension of the concatenated vector is determined based on a quantity of data streams and a quantity of symbols of each data stream. The processing unit is further configured to: perform dimension increase on the concatenated vector to obtain a high-dimensional vector; and input the high-dimensional vector into the training unit.

In a possible implementation, the processing unit is configured to perform dimension increase on a data stream to obtain a high-dimensional vector, where a dimension of the high-dimensional vector is determined based on a quantity of data streams and a quantity of symbols of each data stream. The processing unit is further configured to: perform a first operation on the high-dimensional vector and the one or more identifiers, and input a result of the first operation into the training unit. For example, the result of the first operation includes data streams with identifiers, and the data streams are also a high-dimensional vector.

In a possible implementation, the one or more identifiers are determined based on a pseudo-random sequence, and the pseudo-random sequence is related to one or more of a cell identity, a user identifier, and an index of the data stream.

In a possible implementation, the index of the data stream is indicated by using downlink control information DCI.

In a possible implementation, the one or more identifiers are determined based on a complex sequence or a real sequence, and the complex sequence or the real sequence is determined based on a random sequence and a mapping relationship. The mapping relationship includes a first mapping relationship between a plurality of complex identifiers and a plurality of index values, and/or a second mapping relationship between a plurality of real identifiers and a plurality of index values. The random sequence is determined based on a user identifier and/or an index of the data stream, and a value in the random sequence is an index value in the first mapping relationship and/or an index value in the second mapping relationship.

In a possible implementation, the processing unit is configured to determine a random sequence based on a user identifier and/or an index of the data stream, and a value in the random sequence is an index value in a mapping relationship. The mapping relationship includes a first mapping relationship between a plurality of complex identifiers and a plurality of index values, and/or a second mapping relationship between a plurality of real identifiers and a plurality of index values. The processing unit is configured to search, based on the value in the random sequence, the mapping relationship for a complex identifier or a real identifier, in the mapping relationship, corresponding to the value in the random sequence, to obtain a complex sequence or a real sequence. The processing unit is configured to determine one or more identifiers based on the complex sequence or the real sequence.

In a possible implementation, a largest value in the random sequence is a largest index value in the first mapping relationship or the second mapping relationship.

In a possible implementation, the first mapping relationship or the second mapping relationship is predefined by the first apparatus, or is obtained through radio resource control RRC configuration.

In a possible implementation, the one or more identifiers are determined based on a first function relationship, and a parameter of the first function relationship is related to one or more of a quantity of data streams, a maximum quantity of supported streams, a maximum dimension of the identifier, a dimension index of the identifier, and a user identifier.

In a possible implementation, the first function relationship satisfies the following formula:

$$r(l, n_{RNTI}, i) = cos\left(\frac{l}{M^{\frac{i}{d}}} + \left(2\pi \times M^{\frac{i}{d}}\right)\frac{n_{RNTI}}{2^{16}}\right) + j\sin\left(\frac{l}{M^{\frac{i}{d}}} + \left(2\pi \times M^{\frac{i}{d}}\right)\frac{n_{RNTI}}{2^{16}}\right),$$

where

$r(l, n_{RNTI}, i)$ includes the one or more identifiers, $l$ represents the quantity of data streams, $n_{layer}$ represents the index value of the data stream, d represents the maximum dimension of the identifier, $i$ represents the dimension index of the identifier, $M$ represents the maximum quantity of supported streams, $n_{RNTI}$ represents the user identifier, *cos* represents a cosine function, and *sin* represents a sine function.

In a possible implementation, the one or more identifiers belong to an identifier sequence of the data transmit end, or the one or more identifiers belong to an identifier sequence of the data receive end; and there is a correspondence between the identifier sequence of the data transmit end and the identifier sequence of the data receive end.

In a possible implementation, the communication apparatus further includes a communication unit. The communication unit is configured to send the output information of the data transmit end, where the output information is input to the data receive end after being transmitted through a channel; or the communication unit is configured to send the output information of the data receive end, where the output information of the data receive end is used by the data receive end and the data transmit end to update respective training units.

According to a seventh aspect, this application provides a communication apparatus. The communication apparatus may be a network device, may be an apparatus in a network device, or may be an apparatus that can match a network device for using. In a possible implementation, the communication apparatus may include a functional module. The functional module may be implemented by a hardware circuit, software, or a combination of a hardware circuit and software.

Optionally, for other possible implementations of the data processing method performed by the communication apparatus in the seventh aspect, refer to the possible implementations of the first aspect or the sixth aspect. Details are not described herein again.

According to an eighth aspect, this application provides a communication apparatus. The communication apparatus may be a terminal or a network device, may be an apparatus in a terminal or a network device, or may be an apparatus that can match a terminal and a network device for using. In a possible implementation, the communication apparatus may include a functional module. The functional module may be implemented by a hardware circuit, software, or a combination of a hardware circuit and software.

Optionally, for other possible implementations of the data processing method performed by the communication apparatus in the eighth aspect, refer to the third aspect to the fifth aspect and the possible implementations of the third aspect to the fifth aspect. Details are not described herein again.

For the sixth aspect to the eighth aspect, in an example, a processing unit may be a processor, and a communication unit may be a transceiver unit, a transceiver, or a communication interface. It may be understood that when the communication apparatus is a communication device (for example, a terminal or a network device), the communication unit may be a transceiver (for example, and the transceiver includes a transmitter and a receiver) in the communication apparatus, for example, implemented by using an antenna, a feeder, and a codec in the communication apparatus. If the communication apparatus is a chip disposed in a device, the processing unit may be a processing circuit, a logic circuit, or the like of the chip, and the communication unit may be an input/output interface of the chip, for example, an input/output circuit or a pin.

According to a ninth aspect, this application provides a communication apparatus, including a processor, configured to execute instructions. Optionally, the communication apparatus further includes a memory, and the memory is configured to store the instructions. When the instructions are executed by the processor, the communication apparatus is enabled to implement the method according to any one of the first aspect to the fifth aspect and the possible implementations of the first aspect to the fifth aspect. Optionally, the processor is coupled to the memory.

According to a tenth aspect, this application provides a communication system. The communication system includes a plurality of apparatuses or devices according to the sixth aspect to the eighth aspect, and the apparatuses or devices are enabled to perform the method according to any one of the first aspect to the fifth aspect and the possible implementations of the first aspect to the fifth aspect.

According to an eleventh aspect, this application provides a computer-readable storage medium. The computer-readable storage medium stores instructions. When the instructions are run on a computer, the computer is enabled to perform the method according to any one of the first aspect to the fifth aspect and the possible implementations of the first aspect to the fifth aspect.

According to a twelfth aspect, this application provides a computer program product, including instructions. When the instructions are run on a computer, the computer is enabled to perform the method according to any one of the first aspect to the fifth aspect and the possible implementations of the first aspect to the fifth aspect.

According to a thirteenth aspect, this application provides a chip, and the chip includes a processor (or a logic circuit). Optionally, the chip may further include a communication interface (or an interface), configured to implement the method according to any one of the first aspect to the fifth aspect and the possible implementations of the first aspect to the fifth aspect. In a possible implementation, if the chip is a minimum processing unit in an entire system, the chip may be a processor, or may include a processor and a memory, or may include a processor, a memory, and a transceiver, configured to implement the method according to any one of the first aspect to the fifth aspect and the possible implementations of the first aspect to the fifth aspect.

According to a fourteenth aspect, this application provides a chip system. The chip system includes a processor and an interface. Optionally, the chip system may further include a memory, configured to implement the method according to any one of the first aspect to the fifth aspect and the possible implementations of the first aspect to the fifth aspect. The chip system may include a chip, or may include a chip and another discrete component.

BRIEF DESCRIPTION OF DRAWINGS

FIG. 1 is a diagram of a communication system according to this application;
FIG. 2 is a schematic flowchart of a data processing method according to this application;
FIG. 3 is a diagram of concatenating data streams and corresponding identifiers and inputting a corresponding result into a training unit according to this application;
FIG. 4 is another diagram of concatenating data streams and corresponding identifiers and inputting a corresponding result into a training unit according to this application;
FIG. 5 is a diagram of performing dimension increase on data streams, performing a first operation on dimension-increased data streams and corresponding identifiers in high-dimensional space, and inputting a corresponding result into a training unit according to this application;
FIG. 6 is a diagram of a communication apparatus according to this application; and
FIG. 7 is a diagram of another communication apparatus according to this application.

DESCRIPTION OF EMBODIMENTS

In embodiments of this application, "/" may represent an "or" relationship between associated objects. For example, A/B may represent A or B. "and/or" may be used to indicate that there are three relationships between associated objects. For example, A and/or B may represent the following three cases: Only A exists, both A and B exist, and only B exists, where A and B may be singular or plural. For ease of describing technical solutions in embodiments of this application, words such as "first" and "second" may be used to distinguish technical features with a same or similar function in embodiments of this application. The terms such as "first" and "second" do not limit a quantity and an execution sequence, and the terms such as "first" and "second" do not indicate a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

The following describes the technical solutions in embodiments of this application with reference to accompanying drawings in embodiments of this application.

To enable a transmitter machine or a receiver machine to distinguish between and reuse multi-layer data streams processed by a same neural network, this application provides a data processing method, where the method can be used to distinguish between the multi-layer data streams.

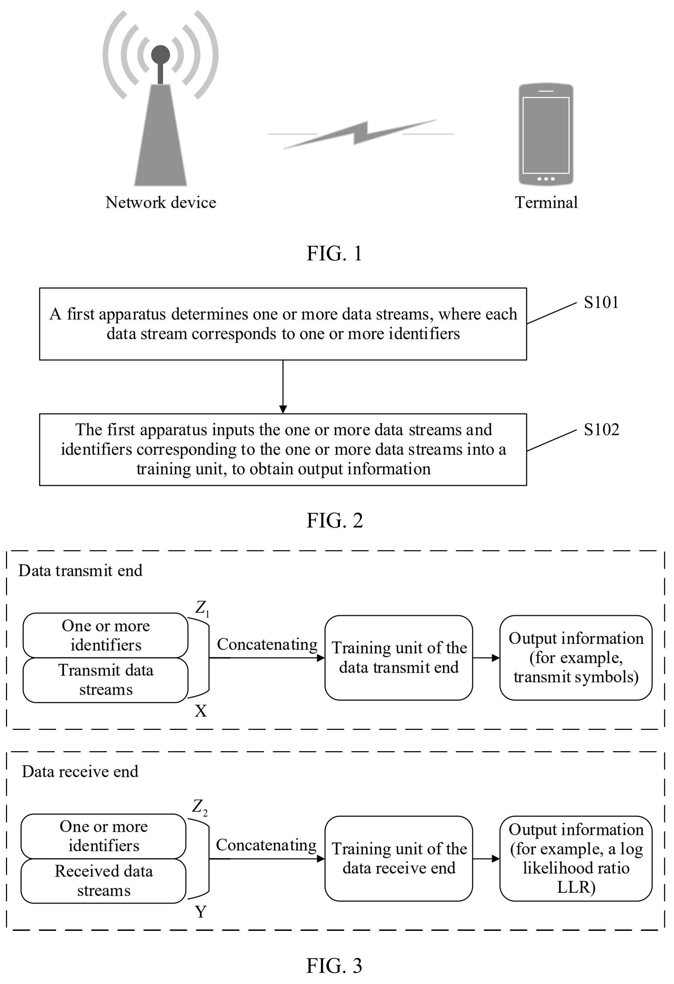

The data processing method provided in this application may be applied to a communication system shown in FIG. 1. For example, the communication system includes a network device and a terminal.

The communication system in this application may include but is not limited to communication systems using various radio access technologies (radio access technologies, RATs). For example, the communication system may be a narrowband internet of things (narrowband Internet of things, NB-IoT) system, a long term evolution (long term evolution, LTE) communication system, a 5G (or referred to as new radio (new radio, NR)) communication system, or a transition system between the LTE communication system and the 5G communication system, where the transition system may also be referred to as a 4.5G communication system. Certainly, the communication system may be a future communication system, for example, a 6th generation (6th generation, 6G) system or even a 7th generation (7th generation, 7G) system. A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of communication network architectures and emergence of new service scenarios, the technical solutions provided in embodiments of this application are also applicable to similar technical problems.

The terminal, also referred to as a terminal (terminal) device, user equipment (user equipment, UE), a mobile station (mobile station, MS), a mobile terminal (mobile terminal, MT), or the like, is a device that provides voice and/or data connectivity for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal in a 5G network, a terminal in a future evolved network, or a terminal in a future communication system.

The network device in this application is a radio access network (radio access network, RAN) node (or device) that connects the terminal to a wireless network, and may also be referred to as a base station. For example, some examples of the RAN node are a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle-to-everything (vehicle-to-everything, V2X) device), or a communication device in device-to-device (device-to-device, D2D) communication.

In a possible implementation, the network device may include a central unit (central unit, CU) node, or a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by a CU, functions of some or all of remaining protocol layers are distributed in a DU, and the CU centrally controls the DU. In some deployment of the network device, the CU may be further split into a CU-control plane (control plane, CP), a CU-user plane (user plane, UP), and the like. In another possible implementation, the network device may be an antenna unit (radio unit, RU) or the like. In another possible implementation, the network device may be an open radio access network (open radio access network, ORAN) architecture or the like. A specific type of the network device is not limited in this application. For example, when the network device is of the ORAN architecture, the network device in embodiments of this application may be an access network device in an ORAN, a module in the access network device, or the like. In an ORAN system, a CU may also be referred to as an open central unit (open CU, O-CU), a DU may also be referred to as an open distributed unit (O-DU), the CU-DU may also be referred to as an open central unit-distributed unit (O-CU-DU), the CU-UP may also be referred to as an open central unit-control plane (O-CU-UP), and the RU may also be referred to as an open antenna unit (O-RU).

It should be noted:

that "sending" and "receiving" in embodiments of this application indicate signal transmission directions. For example, "sending information to a terminal" may be understood as a destination of the information being the terminal device, and may include direct sending through an air interface, or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as coding and modulation, may be performed on the information between the source end at which the information is sent and the destination end, but the destination end may understand valid information from the source end. Similar descriptions in this application may be understood similarly, and details are not described again.

In embodiments of this application, an "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be used for determining to-be-indicated information.

I. For ease of understanding, the following describes in detail definitions of related terms in this application.

1. Training unit in this application

Currently, artificial intelligence (artificial intelligence, AI) technologies can be applied to a network layer (for example, network optimization, mobility management, and resource allocation) and a physical layer (for example, channel encoding and decoding and channel prediction). For example, common AI technologies include reinforcement learning, supervised learning, and unsupervised learning. The training unit in this application includes one or more artificial intelligence AI modules for signal processing in a transmitter machine or a receiver machine. For example, if a training unit is one or more AI modules (including a coding module, a modulation module, a MIMO module, a waveform (waveform) module, a radio frequency (radio frequency, RF) module, and the like) for signal processing at a physical layer, the one or more modules may be jointly optimized by using an AI algorithm, and a whole of joint optimization is the training unit.

2. Data stream in this application

For example, the one or more data streams in this application are multi-layer data streams. It is assumed that the transmitter machine or the receiver machine in this application is designed by using a convolutional neural network (convolutional neural network, CNN), for example, the transmitter machine or the receiver machine includes a multi-layer CNN neural network, and the one or more data streams input by the transmitter machine or the receiver machine are the multi-layer data streams. For another example, when the transmitter machine or the receiver machine performs MIMO pilot-free transmission (for example, without a demodulation reference signal (demodulation reference signal, DMRS)), the one or more data streams input by the transmitter machine or the receiver machine are multi-layer MIMO data streams.

3. Identifier in this application

For example, the one or more identifiers in this application are complex identifiers or real identifiers. For example, the identifier may be represented in a complex form (for example, represented by $1/\sqrt{2}(1 + 1j)$ ), or may be represented in a real form (for example, represented by 1 or -1). A set of the one or more identifiers may be referred to as an identifier sequence. For example, a set of one or more complex identifiers may be referred to as a complex identifier sequence, and a set of one or more real identifiers may be referred to as a real identifier sequence.

II. The data processing method provided in this application is described.

FIG. 2 is a schematic flowchart of a data processing method according to this application. The data processing method is applied to the communication system shown in FIG. 1. For example, the data processing method may be performed by a first apparatus. The first apparatus may be a terminal or an apparatus that can implement functions of a terminal, or may be a network device or an apparatus that can implement functions of a network device. The data processing method includes the following steps.

S101: The first apparatus determines one or more data streams, where each data stream corresponds to one or more identifiers.

(1) The one or more data streams are multi-layer data streams, and each data stream includes a plurality of symbols. For example, when the first apparatus is a transmitter machine, it is assumed that the one or more data streams are represented by X (for example, X may be multi-layer modulated real symbol streams or multi-layer modulated complex symbol streams, and may be collectively referred to as multi-layer modulated data streams), and X includes a plurality of real symbols or a plurality of complex symbols. X may be represented in a form of a matrix, and dimensions of the matrix X are represented by $l \times n$, where $l$ represents a quantity of data streams, $n$ represents a quantity of symbols of each data stream, and $l \times n$ represents a total quantity of symbols of the transmit data streams. Optionally, for the multi-layer modulated data streams X, $l$ may represent a quantity of layers of the multi-layer modulated data streams, $n$ may represent a quantity of symbols of each layer, and $l \times n$ represents a total quantity of symbols of the multi-layer modulated data streams of the transmitter machine.

For another example, when the first apparatus is a receiver machine, it is assumed that the one or more data streams are represented by Y, and Y may be multi-antenna received symbol streams (for example, multi-layer MIMO data streams), for example, Y includes a plurality of real symbols or a plurality of complex symbols. Y may be represented in a form of a matrix, and dimensions of the matrix Y are represented by $l \times n \times r,$ where $l$ represents a quantity of data streams, $n$ represents a quantity of symbols of each data stream, $r$ represents a quantity of receive antennas, and $l \times n \times r$ represents a total quantity of symbols of the received data streams. Optionally, for the multi-layer modulated data streams Y, $l$ may represent a quantity of layers of the multi-layer modulated data streams, $n$ may represent a quantity of symbols of each layer, $r$ represents the quantity of receive antennas, and $l \times n \times r$ represents a total quantity of symbols of the multi-layer modulated data streams of the receiver machine.

(2) The identifiers are used to distinguish between different data streams or distinguish between different symbols in a same data stream.

In a possible implementation, one data stream includes a plurality of symbols, and each symbol corresponds to one identifier.

For example, it is assumed that one data stream X includes $l \times n$ symbols, and each symbol corresponds to one identifier. The $l \times n$ symbols correspond to $l \times n$ identifiers. In this case, a quantity of identifiers is the same as a quantity of symbols of the data stream. Optionally, a set of the one or more identifiers may be referred to as an identifier sequence. For example, a set of $l \times n$ identifiers is an identifier sequence Z.

In a possible implementation, one data stream includes a plurality of symbols, and a part or all of the plurality of symbols correspond to one identifier.

For example, if some of a plurality of symbols of a data stream correspond to one identifier, it is assumed that the data stream includes $l \times n$ symbols. Some (for example, $a \times n$ symbols, $a < l$) of the $l \times n$ symbols correspond to one identifier, and other symbols (for example, $(l - a) \times n$ symbols) in the $l \times n$ symbols correspond to another identifier. In this case, the data stream corresponds to two identifiers. Optionally, the other symbols (for example, $(l - a) \times n$ symbols) in the $l \times n$ symbols may further correspond to a plurality of other identifiers, for example, each symbol corresponds to one identifier, or some of the symbols correspond to one identifier. This is not limited in this application. For another example, if all the symbols in the plurality of symbols of the data stream correspond to one identifier, it is assumed that the data stream includes $l \times n$ symbols, the $l \times n$ symbols all correspond to one same identifier. In the foregoing example, a quantity of identifiers is less than a quantity of symbols of the data stream.

In a possible implementation, different data streams correspond to different identifiers.

For example, it is assumed that different data streams include a first data stream and a second data stream. If each symbol of the first data stream corresponds to one identifier, the first data stream corresponds to a plurality of identifiers (or in other words, the first data stream corresponds to a first identifier sequence); and if each symbol of the second data stream corresponds to one identifier, the second data stream corresponds to a plurality of identifiers (or in other words, the second data stream corresponds to a second identifier sequence). If the first data stream and the second data stream correspond to different identifiers, the first identifier sequence is different from the second identifier sequence. Specifically, all identifiers in the first identifier sequence are different from all identifiers in the second identifier sequence; or some identifiers in the first identifier sequence are different from some identifiers in the second identifier sequence. This is not limited in this application.

For another example, it is assumed that different data streams include a third data stream and a fourth data stream. If all symbols of the third data stream correspond to one first identifier, and all symbols of the fourth data stream correspond to one second identifier, the first identifier is different from the second identifier, so that the third data stream and the fourth data stream can be distinguished.

For another example, it is assumed that different data streams include a fifth data stream and a sixth data stream. Some symbols of the fifth data stream correspond to a first identifier, and other symbols of the fifth data stream correspond to another second identifier. Some symbols of the sixth data stream correspond to a third identifier, and other symbols of the sixth data stream correspond to another fourth identifier. The first identifier is different from the third identifier, and the first identifier is also different from the fourth identifier. The second identifier is different from the third identifier, and the second identifier is also different from the fourth identifier.

Optionally, the foregoing examples may further be arranged and combined based on a correspondence between symbols of different data streams and identifiers. Details are not described herein.

S102: The first apparatus inputs the one or more data streams and identifiers corresponding to the one or more data streams into a training unit, to obtain output information.

Because the data streams correspond to the identifiers, even if the training unit includes a multi-layer CNN neural network and the multi-layer CNN neural network reuses a same neural network for processing, the training unit can distinguish between different data streams based on different identifiers, and train the data streams.

For example, when the first apparatus is the transmitter machine, the training unit may include one or more AI modules for signal processing in the transmitter machine, for example, AI joint optimization modules for channel encoding, modulation, precoding, and waveform generation. The first apparatus may input the one or more data streams and the identifiers corresponding to the one or more data streams into the training unit (for example, perform channel encoding and modulation on the data streams and the identifiers corresponding to the data streams), to obtain the output information. The output information includes data streams with identifier information.

For another example, when the first apparatus is the receiver machine, the training unit may include one or more AI modules for signal processing in the receiver machine, for example, AI joint optimization modules for waveform demodulation, channel estimation, channel equalization, demodulation, and channel decoding. The first apparatus may input the one or more data streams and the identifiers corresponding to the one or more data streams into the training unit (for example, perform channel decoding and demodulation on the data streams and the identifiers corresponding to the data streams), to obtain the output information. The output information includes decoded information (for example, a log likelihood ratio (likelihood rate, LLR)).

In this embodiment, the first apparatus may associate the data streams with the identifiers, and distinguish between the different data streams based on the different identifiers. In addition, the training unit of the first apparatus can distinguish between the different data streams based on different identifiers when performing AI training, so that the data streams can be trained by sharing parameters (for example, reusing a same neural network processing method). This helps improve generalization and scalability of a network.

III. The following describes in detail a method for determining identifiers corresponding to the data stream.

When the first apparatus in this application is a data transmit end or a data receive end, methods for determining the identifiers corresponding to the data stream are similar, and methods in the following several examples may be used.

Example 1: The one or more identifiers corresponding to the data stream are determined based on a pseudo-random sequence.

The pseudo-random sequence is related to one or more of a cell identity, a user identifier, and an index of the data stream.

In a possible implementation, the first apparatus may generate the pseudo-random sequence $c(n)$ in a pseudo-random sequence generation method in an NR protocol, as shown in Formula (1):

$$c(n) = \left(x_1(n + N_c) + x_2(n + N_c)\right)\bmod 2 \quad (1)$$

Herein, $c(n)$ represents the pseudo-random sequence, $x_1(n + N_c)$ and $x_2(n + N_c)$ represent binary sequences, a value of $N_c$ is 1600 (that is, $N_c = 1600$), and mod represents a modulo operation. The pseudo-random sequence $c(n)$ is an n-length sequence, and a value of n starts from 0. For example, $c(0)$ is represented by $c(0) = (x_1(0 + 1600) + x_2(0 + 1600))\bmod 2$, that is, a value of $c(0)$ is determined based on $x_1(1600)$ and $x_2(1600)$. Values of $x_1(1600)$ and $x_2(1600)$ may be iteratively obtained according to recursive Formulas (2) and (3). For example, Formula (2) is represented by:

$$x_1(n + 31) = (x_1(n + 3) + x_1(n))\bmod 2 \quad (2)$$

Herein, $x_1(0) = 1$, and $x_1(n) = 0$, where n = 1, 2, ..., 30. For example, according to Formula (2), $x_1(1600)$ may be represented by $x_1(1569 + 31) = (x_1(1569 + 31) + x_1(1569))\bmod 2$, and the rest may be deduced by analogy, until $x_1(1600)$ may be represented by $x_1(0)$ to $x_1(30)$. Similarly, when n>30, a subsequent binary sequence $x_2$ may be represented by using Formula (3):

$$x_2(n + 31) = (x_2(n + 3) + x_2(n + 2) + x_2(n + 1) + x_2(n))\bmod 2 \quad (3)$$

Herein, a value of $x_2$ is related to a parameter $c_{init}$ defined in this application, and the parameter $c_{init}$ is related to one or more of the cell identity, the user identifier, and the index of the data stream. For example, it is assumed that the parameter $c_{init}$ is shown in Formula (4):

$$c_{init} = A \cdot n_{RNTI} + B \cdot n_{layer} + n_{ID} \quad (4)$$

Herein, $n_{RNTI}$ represents a parameter (for example, a cell radio network temporary identifier (cell radio network temporary identifier, C-RNTI)) related to the user identifier (for example, a terminal identity), and A is a coefficient of $n_{RNTI}$, for example, a value of A may be $2^{15}$, or may be another value. This is not limited in this application. $n_{layer}$ represents an index value of the data stream (optionally, for the multi-layer data stream, $n_{layer}$ represents an index value of a layer of the multi-layer data stream), and B is a coefficient of $n_{layer}$, for example, a value of B may be $2^{10}$, or may be another value. This is not limited in this application. $n_{ID}$ represents a parameter related to the cell identity (for example, a cell ID or a parameter related to the cell identity configured by a base station). Optionally, the foregoing Formula (4) is merely an example. The

parameter $c_{init}$ may be represented in a form of a variant of Formula (4), for example, changes of the coefficients A and B or a change of the parameter $n_{RNTI}$, or the like. This is not limited in this application.

Optionally, the parameter $c_{init}$ may be obtained through radio resource control (radio resource control, RRC) configuration or downlink control information (downlink control information, DCI) indication. For example, when the first apparatus is a terminal, a base station may configure the parameter $c_{init}$ to the terminal through RRC or indicate the parameter to the terminal by using DCI. The first apparatus receives the parameter $c_{init}$ and generates the pseudo-random sequence $c(n)$ based on the parameter $c_{init}$.

Optionally, the parameter $n_{layer}$ may be indicated by using DCI. For example, when the first apparatus is a terminal, a base station may indicate the parameter $n_{layer}$ by using the DCI in a procedure of sending a reference signal. The first apparatus receives the parameter $n_{layer}$ and generates the pseudo-random sequence $c(n)$ based on the parameter $n_{layer}$.

In a possible implementation, after the first apparatus determines the pseudo-random sequence $c(n)$, the first apparatus may generate one or more complex identifiers or one or more real identifiers based on the pseudo-random sequence. For example, the first apparatus may generate a complex identifier sequence r(n), as shown in Formula (5):

$$r(\text{n}) = \frac{1}{\sqrt{2}}\big(1 - 2 \cdot c(2\text{n})\big) + j\,\frac{1}{\sqrt{2}}\big(1 - 2 \cdot c(2\text{n} + 1)\big) \ \ (5)$$

Herein, $r$(n) includes the one or more identifiers, c(2n) represents an even sequence of the pseudo-random sequence $c(n)$, and forms a real part of the complex identifier sequence; and c(2n + 1) represents an odd sequence of the pseudo-random sequence $c(n)$, and forms an imaginary part of the complex identifier sequence.

For another example, the first apparatus may generate a complex identifier sequence $r$(n), as shown in Formula (6):

$$r(\text{n}) = \frac{1}{\sqrt{2}}\big(1 - 2 \cdot c(\text{n})\big) \ \ (6)$$

Herein, $r$(n) includes the one or more identifiers, and c(n) represents a pseudo-random sequence.

Optionally, for a correspondence between the one or more identifiers included in $r$(n) and the data stream, refer to the corresponding description in S101. Details are not described herein again.

In Example 1, the identifiers may be generated by reusing the pseudo-random sequence generation method in the NR protocol, and the parameter $c_{init}$ in the pseudo-random sequence generation method is improved, so that the generated identifiers can accurately identify different layers of the MIMO data stream. This helps distinguish between different data streams.

Example 2: The one or more identifiers corresponding to the data stream are determined based on a complex sequence or a real sequence, and the complex sequence or the real sequence is determined based on a random sequence and a mapping relationship.

The mapping relationship includes a first mapping relationship between a plurality of complex identifiers and a plurality of index values, and/or a second mapping relationship between a plurality of real identifiers and a plurality of index values. The first apparatus may determine an index value, and then determine a corresponding real identifier or complex identifier based on the index value and the mapping relationship. The first mapping relationship and/or the second mapping relationship may be predefined by the first apparatus, or may be obtained through RRC configuration. For example, the data transmit end and the data receive end may predefine the first mapping relationship and/or predefine the second mapping relationship that can be directly used when query is required. For another example, it is assumed that the first apparatus is a terminal, the first mapping relationship and/or the mapping relationship may be configured for the terminal by a base station by using RRC.

In a possible implementation, the first mapping relationship between a complex sequence and the index values is shown in Table 1.

Table 1: Table of the first mapping relationship between the complex sequence and the index values

| Index Index value | Value Value of the complex identifier |
|---|---|
| 0 | $1/\sqrt{2}(1 + 1j)$ |
| 1 | $1/\sqrt{2}(1 - 1j)$ |

(continued)

| Index Index value | Value Value of the complex identifier |
|---|---|
| 2 | $1/\sqrt{2}(-1+1j)$ |
| 3 | $1/\sqrt{2}(-1-1j)$ |

Each index value in Table 1 corresponds to a value of the complex identifier. For example, when the index value is 0, the corresponding value of the complex identifier is $1/\sqrt{2}(1+1j)$; and when the index value is 1, the corresponding value of the complex identifier is $1/\sqrt{2}(1-1j)$.

In a possible implementation, the second mapping relationship between a real sequence and the index values is shown in Table 2.

Table 2: Table of the second mapping relationship between the real sequence and the index values

| Index Index value | Value Value of the real identifier |
|---|---|
| 0 | 1 |
| 1 | -1 |

Each index value in Table 2 corresponds to a value of the real identifier. For example, when the index value is 0, the corresponding value of the complex identifier is 1; and when the index value is 1, the corresponding value of the complex identifier is -1.

Optionally, Table 1 or Table 2 is merely an example, and a mapping relationship between the real sequence or the complex sequence and the index values is not limited in this application. For example, the mapping relationship between the real sequence and the index values may not be in a form of a table, and may be represented in a form of a set. For example, the first mapping relationship may be a mapping relationship between a first set including the index values and a second set including the values of the complex identifiers.

In a possible implementation, that the first apparatus determines the one or more identifier sequences includes the following steps.

(1) The first apparatus determines a random sequence based on a user identifier and/or an index of the data stream.

A value in the random sequence is an index value in the mapping relationship. Optionally, a largest value in the random sequence is a largest index value in the first mapping relationship or the second mapping relationship.

For example, it is assumed that the largest index value in the mapping relationship is L, and the random sequence determined by the first apparatus is shown in Formula (7):

$$I(n) \sim \mathrm{U}(0, L) \quad (7)$$

Herein, $I(n)$ represents the random sequence, $\sim\mathrm{U}(0, L)$ represents satisfying uniform distribution when a parameter is L, and L represents the largest index value of the mapping relationship (for example, the largest index value 3 in Table 1). It can be learned from Formula (7) that the random sequence $I(n)$ satisfies uniform distribution when the parameter is L. Optionally, the random sequence may further satisfy normal distribution when a truncated parameter is L, where L represents the largest index value of the mapping relationship.

Optionally, the random sequence $I(n)$ is determined based on $n_{layer}$ and/or $n_{RNTI}$, or is determined based on a function related to $n_{layer}$ and/or a function related to $n_{RNTI}$. $n_{layer}$ and/or $n_{RNTI}$ may be configured through RRC or indicated by using DCI. For a specific implementation, refer to the foregoing corresponding descriptions. Details are not described herein again.

(2) The first apparatus searches, based on the value in the random sequence, the mapping relationship for a complex identifier or a real identifier, in the mapping relationship, corresponding to the value in the random sequence, to obtain a complex sequence or a real sequence.

For example, it is assumed that the first apparatus generates a random sequence $I(n) = \{0, 1, 1, 2, 3\}$, and searches, based on values of the random sequence, the first mapping relationship or the second mapping relationship for identifiers corresponding to the same index values, for example, searches the first mapping relationship for complex identifiers, corresponding to the index values {0, 1, 1, 2, 3}, including $\left\{1/\sqrt{2}(1+1j), 1/\sqrt{2}(1-1j), 1/\sqrt{2}(1-1j), 1/\sqrt{2}(-1+1j), 1/\sqrt{2}(-1-1j)\right\}$ . The plurality of complex identifiers are a plurality of identifiers corresponding to the random sequence, and the first apparatus completes searching to obtain the plurality of identifiers.

In Example 2, the identifiers may be generated by using the values in the random sequence as the index values in the mapping relationship, and the corresponding identifiers are determined by searching for the index values in the mapping relationship.

Example 3: The one or more identifiers corresponding to the data stream are determined based on a first function relationship.

A parameter of the first function relationship is related to one or more of a quantity of data streams, a maximum quantity of supported streams, a maximum dimension of the identifier, a dimension index of the identifier, and a user identifier. The maximum dimension of the identifier may be equal to a dimension of high-dimensional space. The first apparatus may perform dimension increase on a multi-layer data stream in the high-dimensional space, to obtain a multi-layer data stream in the high-dimensional space.

In a possible implementation, the first function relationship is shown in Formula (8):

$$r(l, n_{RNTI}, i) = cos\left(\frac{l}{M^{\frac{i}{d}}} + \left(2\pi \times M^{\frac{i}{d}}\right)\frac{n_{RNTI}}{2^{16}}\right) + j\sin\left(\frac{l}{M^{\frac{i}{d}}} + \left(2\pi \times M^{\frac{i}{d}}\right)\frac{n_{RNTI}}{2^{16}}\right) \quad (8)$$

Herein, $r(l, n_{RNTI}, i)$ includes the one or more identifiers, $l$ represents the quantity of data streams, $d$ represents the maximum dimension of the identifier, $i$ represents the dimension index of the identifier (where a value of $i$ is 0 to (d - 1)), $M$ represents the maximum quantity of supported streams, $n_{RNTI}$ represents the user identifier, $cos$ represents a cosine function, and $sin$ represents a sine function.

Optionally, the first function relationship is merely an example. The first function relationship may alternatively be another variation, for example, a function other than a sine function or a cosine function is used. This is not limited in this application.

In Example 3, the identifiers may be generated based on the first function relationship, and the parameter of the first function is designed to be related to the data stream. This helps distinguish between different data streams.

Optionally, Example 1 to Example 3 in this section may be separately performed, or may be performed in combination with the steps in S101. This is not limited in this application.

IV. The following describes in detail a method for associating the data streams with the corresponding identifiers.

Because the data streams correspond to the identifiers, the data streams and the identifiers corresponding to the data streams may be associated before being input into the training unit, to obtain input information of the training unit. The following separately describes, by using several examples, a method in which the data transmit end or the data receive end associates the data streams with the corresponding identifiers.

Example 1: Dimensions of the data streams and the corresponding identifiers remain unchanged, and concatenation is directly performed to obtain a concatenated vector as the input information of the training unit.

For example, FIG. 3 is a diagram of concatenating data streams and corresponding identifiers and inputting a corresponding result into a training unit according to this application. The diagram includes separate processing procedures of a data transmit end and a data receive end. The separate processing procedures of the data transmit end and the data receive end are similar, and a difference lies in dimensions of the data streams and input or output information.

1. In a possible implementation, for the data transmit end, a specific concatenation procedure may include the following steps.

(1) The data transmit end concatenates each data stream with corresponding identifiers to obtain a concatenated vector, where a dimension of the concatenated vector is determined based on a quantity of data streams and a quantity of symbols of each data stream.
(2) The data transmit end inputs the concatenated vector into a training unit.

For example, the one or more data streams of the data transmit end may be represented by $X$, and a dimension of $X$ is represented by $l \times n$, where $l$ represents the quantity of data streams, $n$ represents the quantity of symbols of each data stream, and $l \times n$ represents a total quantity of symbols of transmit data streams. In a possible implementation, it is assumed that each symbol of the data streams $X$ corresponds to one identifier, the data streams $X$ correspond to a plurality of identifiers, and a set of the plurality of identifiers may be referred to as an identifier sequence. For example, it is assumed that the identifier sequence of the data transmit end is represented by $Z_1$, and $Z_1$ includes a plurality of real symbols or a plurality of complex symbols. $Z_1$ may be represented in a form of a matrix. Because each symbol of the data streams $\boldsymbol{X}$ corresponds to one identifier, $l \times n$ symbols correspond to $l \times n$ identifiers, and a dimension of the matrix $Z_1$ is represented by $l \times n$, that is, a dimension of the identifier sequence $Z_1$ is the same as a dimension of the data streams $\boldsymbol{X}$. In another possible implementation, it is assumed that a part or all symbols of the data streams $\boldsymbol{X}$ correspond to one identifier. For ease of description, it is assumed that each data stream in the data streams $\boldsymbol{X}$ corresponds to one identifier, and $l$ data streams correspond to $l$ identifiers. In this case, a dimension of the identifier sequence $Z_1$ corresponding to the data streams $\boldsymbol{X}$ may be represented by $l \times 1$. Optionally, if quantities of symbols of at least two data streams in the plurality of data streams are different, for a data stream with a smaller quantity of symbols, the data transmit end may perform zero padding on the data stream, so that the plurality of data streams have a same quantity of symbols.

For example, the data transmit end concatenates each data stream with the corresponding identifiers to obtain the concatenated vector $\boldsymbol{X'}$ = CONCAT($\boldsymbol{X},\boldsymbol{Z_1}$). Herein, $\boldsymbol{X'}$ represents the concatenated vector (namely, the input information of the training unit) of the data transmit end, and CONCAT($\boldsymbol{X},\boldsymbol{Z_1}$) represents to concatenate $\boldsymbol{X}$ with $\boldsymbol{Z_1}$ by using a function CONCAT. A dimension of the concatenated vector $\boldsymbol{X'}$ is represented by $l \times n \times 2$. It is assumed that the data streams $\boldsymbol{X}$ of the data transmit end are complex data streams $X \in \mathbb{C}^{l \times n}$ ($\mathbb{C}$ represents a complex sequence), and the identifier sequence $Z_1$ corresponding to the data streams $\boldsymbol{X}$ is represented by $Z_1 \in \mathbb{C}^{l \times n}$. In this case, the concatenated vector is represented by $X' = \mathrm{CONCAT}(X, Z_1) \in \mathbb{C}^{l \times n \times 2}$. Similarly, it is assumed that the data streams $\boldsymbol{X}$ of the data transmit end are real data streams $X \in \mathbb{R}^{l \times n}$ ($\mathbb{R}$ represents a real sequence), and the identifier sequence $Z_1$ corresponding to the data streams $\boldsymbol{X}$ is represented by $Z_1 \in \mathbb{R}^{l \times n}$. In this case, the concatenated vector is represented by $X' = \mathrm{CONCAT}(X, Z_1) \in \mathbb{R}^{l \times n \times 2}$. Optionally, if the dimension of the identifier sequence $Z_1$ corresponding to the data streams $\boldsymbol{X}$ is $l \times 1$, the identifier sequence $Z_1$ corresponding to the data streams $\boldsymbol{X}$ may be represented by $Z_1 \in \mathbb{C}^{l \times 1}$, and the concatenated vector is represented by $X' = \mathrm{CONCAT}(X, Z_1) \in \mathbb{C}^{l \times (n+1)}$. Optionally, the data transmit end may further concatenate each data stream with the corresponding identifiers in another concatenation manner, to obtain a concatenated vector. For example, the identifier sequence $Z_1$ corresponding to the data streams $\boldsymbol{X}$ is concatenated by using another function or method, to obtain the concatenated vector $X' \in \mathbb{C}^{2l \times 2n}$. However, dimension reduction needs to be performed on output information of the training unit, to reduce a dimension $2l$ to $l$. A specific implementation is not limited in this application.

The data transmit end inputs the concatenated vector $\boldsymbol{X'}$ into the training unit, to obtain the output information. For example, it is assumed that the training unit is a multi-layer neural network, the multi-layer neural network may perform same neural network processing, and the training unit trains the concatenated vector $\boldsymbol{X'}$ by using the multi-layer neural network, to obtain data streams with identifier information (for example, a plurality of transmit symbols, where the plurality of transmit symbols include data stream symbols and identifiers). A specific training process may be performed by using a training method like a CNN. This is not limited in this application.

2. In another possible implementation, for the data receive end, a specific concatenation procedure is similar to that of the data transmit end, and a difference lies in that a dimension of the data streams of the data receive end are different from that of the data streams of the data transmit end, and input information and output information are different.

For example, the one or more data streams of the data receive end may be represented by $Y$, and the dimension of $Y$ is represented by $l \times n \times r$, where $l$ represents a quantity of data streams, $n$ represents a quantity of symbols of each data stream, $r$ represents a quantity of receive antennas, and $l \times n \times r$ represents a total quantity of symbols of the received data streams. In a possible implementation, it is assumed that each symbol of the data streams $\boldsymbol{Y}$ corresponds to one identifier, the data streams $\boldsymbol{Y}$ correspond to a plurality of identifiers, and a set of the plurality of identifiers may be referred to as an identifier sequence. For example, it is assumed that the identifier sequence of the data receive end is represented by $Z_2$, and $Z_2$ includes a plurality of real symbols or a plurality of complex symbols. $Z_2$ may be represented in a form of a matrix. Because each symbol of the data streams $\boldsymbol{Y}$ corresponds to one identifier, $l \times n \times r$ symbols correspond to $l \times n \times r$ identifiers, and a dimension of the matrix $Z_2$ is represented by $l \times n \times r$, that is, a dimension of the identifier sequence $Z_2$ is the same as a dimension of the data streams $\boldsymbol{Y}$. In another possible implementation, it is assumed that a part or all symbols of the data streams $\boldsymbol{Y}$ correspond to one identifier. For ease of description, it is assumed that each data stream in the data streams $\boldsymbol{Y}$ corresponds to one identifier, and $l$ data streams correspond to $l$ identifiers. In this case, a dimension of the identifier sequence $Z_2$ corresponding to the data streams $\boldsymbol{Y}$ may be represented by $l \times 1 \times r$.

For example, the data receive end concatenates each data stream with the corresponding identifiers to obtain the concatenated vector $\boldsymbol{Y'}$ = CONCAT($\tilde{Y}, Z_2$). Herein, $\boldsymbol{Y'}$ represents the concatenated vector (namely, the input information of the training unit) of the data receive end, $\breve{Y}$ represents a matrix obtained after $Y$ is repeated for $l$ times, and CONCAT($\breve{Y}$, $Z_2$) represents to concatenate $\tilde{Y}$ with $Z_2$ by using a function CONCAT. A dimension of the concatenated vector $Y'$ is represented by $l \times n \times (r + 1)$. It is assumed that the data streams $Y$ of the data receive end are complex data streams $Y \in \mathbb{C}^{l \times n \times r}$, and the identifier sequence $Z_2$ corresponding to the data streams $Y$ is represented by $Z_2 \in \mathbb{C}^{l \times n \times 1}$. In this case, the concatenated vector $Y'$ is represented by $Y' = \text{CONCAT}(\widetilde{Y}, Z_2) \in \mathbb{C}^{l \times n \times (r+1)}$. Similarly, it is assumed that the data streams $Y$ of the data receive end are real data streams $Y \in \mathbb{R}^{l \times n \times r}$, and the identifier sequence $Z_2$ corresponding to the data streams $Y$ is represented by $Z_2 \in \mathbb{R}^{l \times n \times 1}$. In this case, the concatenated vector is represented by $Y' = \text{CONCAT}(\widetilde{Y}, Z_2) \in \mathbb{R}^{l \times n \times (r+1)}$. Optionally, if a dimension of the identifier sequence $Z_2$ corresponding to the data streams $Y$ is $l \times 1 \times 1$ (the last dimension is replicated r pieces, and the dimension is updated to $l \times 1 \times r$), the identifier sequence $Z_2$ corresponding to the data streams $Y$ may be represented by $Z_2 \in \mathbb{C}^{l \times (n+1) \times r}$, and the concatenated vector is represented by $Y' = \text{CONCAT}(\widetilde{Y}, Z_2) \in \mathbb{C}^{l \times (n+1) \times r}$.

Optionally, the data receive end may further concatenate each data stream with the corresponding identifiers in another concatenation manner, to obtain a concatenated vector. For an example description, refer to the description of the data transmit end. Details are not described herein.

The data receive end inputs the concatenated vector $Y'$ into the training unit, to obtain the output information. For example, it is assumed that the training unit trains the concatenated vector $Y'$ by using a multi-layer neural network, and data streams with identifier information can be obtained. Optionally, the data receive end may perform an operation based on the data streams with the identifier information to obtain an LLR. A specific training process may be performed by using a training method like a CNN. This is not limited in this application.

Example 2: Dimensions of the data streams and the corresponding identifiers remain unchanged, and concatenation is directly performed to obtain a concatenated vector for dimension increase, and a high-dimensional vector obtained after dimension increase is used as the input information of the training unit.

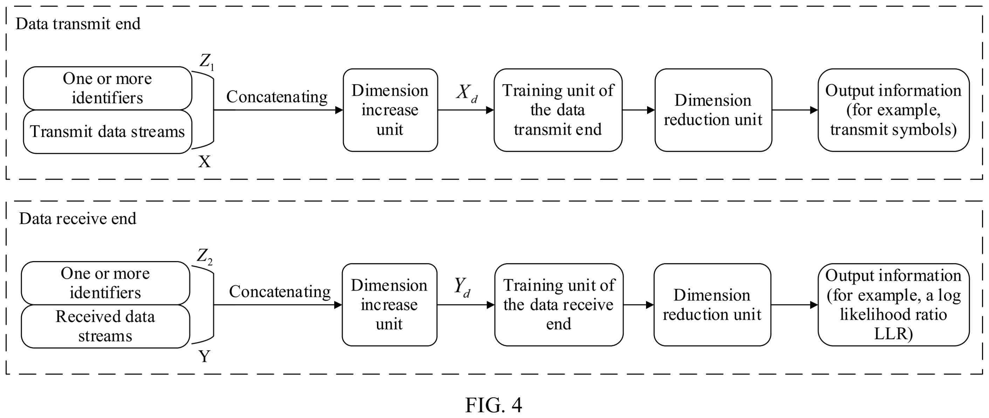

For example, FIG. 4 is another diagram of concatenating data streams and corresponding identifiers and inputting a corresponding result into a training unit according to this application. The diagram includes separate processing procedures of a data transmit end and a data receive end. The separate processing procedures of the data transmit end and the data receive end are similar, and a difference lies in dimensions of the data streams and input or output information. In addition, in Example 2, it is proposed that data may be identified in high-dimensional space. Because AI usually performs feature extraction and/or signal processing in hidden space (also referred to as the high-dimensional space), the data transmit end or the data receive end may identify the data in the high-dimensional space. The procedures shown in FIG. 4 are similar to those shown in FIG. 3, and a difference lies in that dimension increase is performed on a concatenated vector, and a high-dimensional vector obtained after dimension increase is used as the input information of the training unit. The following focuses on the difference between FIG. 3 and FIG. 4.

1. In a possible implementation, for the data transmit end, a specific concatenation and dimension increase procedure may include the following steps.

(1) The data transmit end concatenates each data stream with corresponding identifiers to obtain the concatenated vector, where a dimension of the concatenated vector is determined based on a quantity of data streams and a quantity of symbols of each data stream.

For a specific implementation of this step, refer to the detailed description of the concatenation in Example 1 in this section. Details are not described herein again.

(2) The data transmit end performs dimension increase on the concatenated vector to obtain the high-dimensional vector $X_d$.

For example, for the data transmit end, the concatenated vector $X'$ may be represented by $X' = \text{CONCAT}(X, Z_1) \in \mathbb{C}^{l \times n \times 2}$. A dimension increase unit of the data transmit end performs dimension increase on the concatenated vector $X'$, to obtain the high-dimensional vector $X_d$ represented by $X_d \in \mathbb{C}^{l \times n \times d}$, where $d$ represents an identifier of a data stream in the high-dimensional space, and a value of $d$ may be configured through RRC or indicated by using DCI. The identifier $d$ of the high-dimensional data stream in the high-dimensional space may be the same as a maximum dimension of an identifier, or may be greater than a maximum dimension of an identifier. This is not limited in this application.

(3) The data transmit end inputs the high-dimensional vector $X_d$ into the training unit, to obtain the output information.

For example, different from that in FIG. 3, the data transmit end inputs the high-dimensional vector $X_d$ into the training unit, to obtain the output information. For example, it is assumed that the training unit trains the concatenated vector $X_d$ by using a multi-layer neural network, and data streams with identifier information can be obtained. A specific training process may be performed by using a training method like a CNN. This is not limited in this application.

2. In another possible implementation, for the data receive end, a specific concatenation and dimension increase procedure is similar to that of the data transmit end, and a difference lies in that a dimension of the data streams of the data receive end are different from that of the data streams of the data transmit end, and input information and output information are different.

For example, for the data receive end, the concatenated vector $Y'$ may be represented by $Y' = \mathrm{CONCAT}(\widetilde{Y}, Z_2) \in \mathbb{C}^{l \times n \times (r+1)}$ . A dimension increase unit of the data receive end performs dimension increase on the concatenated vector $Y'$, to obtain a high-dimensional vector $Y_d$ represented by $Y_d \in \mathbb{C}^{l \times n \times d}$ . The data receive end inputs the high-dimensional vector $Y_d$ into the training unit, to obtain the output information. For this implementation, refer to the corresponding description in Example 1 in this section. Details are not described herein again.

Optionally, FIG. 4 further includes a dimension reduction unit, configured to perform dimension reduction on a high-dimensional data stream output by the training unit. For example, the dimension reduction unit may reduce a dimension of the high-dimensional data stream to a dimension before dimension increase, for example, reduce the dimension to $l \times n \times 2$. For a specific dimension reduction method, refer to an existing dimension reduction method. This is not limited in this application.

Example 3: Dimension increase is performed on the data streams, a first operation is performed on dimension-increased data streams and corresponding identifiers in high-dimensional space, and a result of the first operation is used as the input information of the training unit.

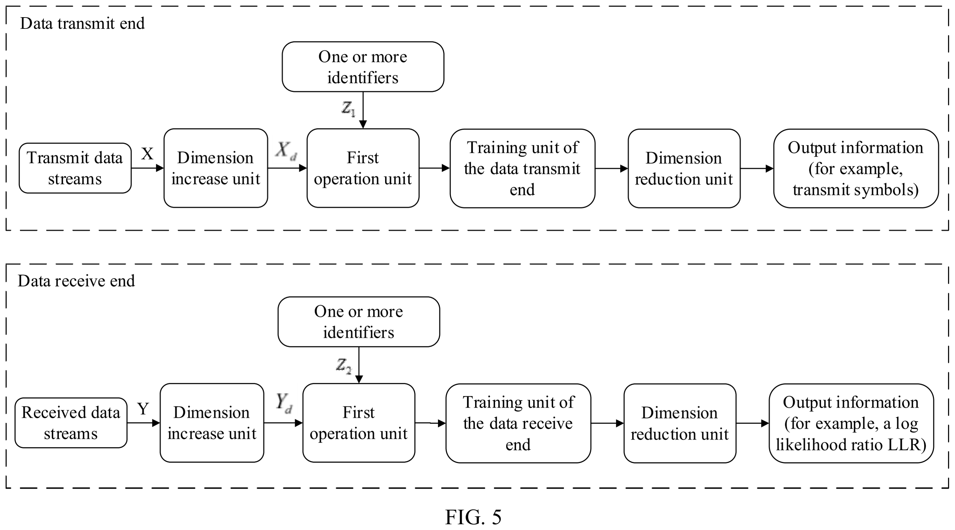

For example, FIG. 5 is a diagram of performing dimension increase on data streams, performing a first operation on dimension-increased data streams and corresponding identifiers in high-dimensional space, and inputting a corresponding result into a training unit according to this application. The diagram includes separate processing procedures of a data transmit end and a data receive end. The separate processing procedures of the data transmit end and the data receive end are similar, and a difference lies in dimensions of the data streams and input or output information.

1. In a possible implementation, for the data transmit end, a specific procedure of performing dimension increase and performing the first operation on the dimension-increased data streams and the corresponding identifiers may include the following steps:

(1) The data transmit end performs dimension increase on the data streams, to obtain a high-dimensional vector, where a dimension of the high-dimensional vector is determined based on a quantity of data streams and a quantity of symbols of each data stream.

For example, the one or more data streams of the data transmit end may be represented by $X$, and a dimension of $X$ is represented by $l \times n$. The data transmit end performs dimension increase on each data stream, to obtain the high-dimensional vector $X_d$ represented by $X_d \in \mathbb{C}^{l \times n \times d}$ , where $d$ represents an identifier of a data stream in the high-dimensional space, and a value of $d$ may be configured through RRC or indicated by using DCI.

(2) The data transmit end performs the first operation on the high-dimensional vector and the one or more identifiers, and inputs the result of the first operation into the training unit.

The first operation may include but is not limited to a conventional mathematical operation like addition, subtraction, multiplication, division, or concatenation. The result of the first operation includes data streams with identifier information, and the data streams are also a high-dimensional vector.

For example, it is assumed that each symbol of the data streams $X$ corresponds to one identifier. If the dimension of $X$ is represented by $l \times n$, a dimension of an identifier sequence $Z_1$ corresponding to the data streams $X$ is represented by $l \times n$. If the high-dimensional vector $X_d$ is represented by $X_d \in \mathbb{C}^{l \times n \times d}$ , the identifier sequence $Z_1$ may be represented by $Z_1 \in \mathbb{C}^{l \times n}$ (if the dimensions of $Z_1$ and $X_d$ are inconsistent, the last dimension labeled $d$ may be obtained by copying $l \times n$, or may be obtained by performing dimension increase by using a dimension increase unit). For example, if the first operation is the conventional mathematical operation like addition, subtraction, multiplication, or division, the dimensions of the high-dimensional vector $X_d$ and the identifier sequence $Z_1$ need to be consistent. Therefore, the data transmit end may first perform dimension increase on the identifier sequence $Z_1$ to obtain a dimension-increased identifier sequence $Z'_1 \in \mathbb{C}^{l \times n \times d}$ , and then perform the first operation on the high-dimensional vector $X_d$ and the identifier sequence $Z'_1$ .

2. In another possible implementation, for the data receive end, a specific concatenation procedure is similar to that of the data transmit end, and a difference lies in that a dimension of the data streams of the data receive end are different from that of the data streams of the data transmit end, and input information and output information are different.

For example, for the data receive end, it is assumed that each symbol of the data streams $Y$ corresponds to one identifier. If a dimension of $Y$ is represented by $l \times n \times r$, a dimension of an identifier sequence $Z_2$ corresponding to the data streams $Y$ is represented by $l \times n \times r$. If a high-dimensional vector $Y_d$ is represented by $Y_d \in \mathbb{C}^{l \times n \times d}$ , the identifier sequence $Z_2$ may be represented by $Z_2 \in \mathbb{C}^{l \times n \times r}$ . If the first operation is an addition operation, a result of the first operation may be represented by $Y_d + Z_2$. Optionally, if the first operation is a conventional mathematical operation like addition, subtraction, multiplication, or division, dimensions of the high-dimensional vector $Y_d$ and the identifier sequence $Z_2$ need to be consistent. For a specific implementation, refer to similar descriptions of the data transmit end. Details are not described herein again.

Optionally, for Example 1 to Example 3 in this section, the output information (for example, the data streams with the identifier information) of the data transmit end is transmitted through a channel and then input to the data receive end. For example, the received data streams Y of the data receive end in FIG. 3 may be represented by Y = HX + N, where H represents the channel, X represents the transmit data streams of the data transmit end, and N represents noise. In a possible implementation, the data streams of the data transmit end are associated with the one or more identifiers, and the obtained output information includes the data streams carrying the identifier information. The data receive end may no longer associate the received data streams with the one or more identifiers (for example, the received data streams carries the identifier information, and the training unit of the data receive end may distinguish between different data streams). For example, the data receive end in FIG. 3 to FIG. 5 may include only the training unit and the output information, and the input information of the training unit is the output information of the data transmit end.

Optionally, the output information of the data receive end is used by the data receive end and the data transmit end to update respective training units. For example, a loss function may be solved by using the output information of the data receive end and the transmit data streams, to obtain a gradient of each trainable parameter in the training unit. Parameters of the training units of the data transmit end and the data receive end are updated based on the gradient of the trainable parameter. The transmit data streams may be training data (for example, the transmit data streams of the data transmit end in FIG. 3), or may be a correct decoding result obtained by the data receive end.

Optionally, for Example 1 to Example 3 in this section, there is a correspondence between the identifier sequence of the data transmit end and the identifier sequence of the data receive end. For example, the identifier sequence $Z_1$ of the data transmit end and the identifier sequence $Z_2$ of the data receive end may be the same, or may be different but have a relationship (for example, $Z_2$ is the identifier sequence obtained after matrix change (for example, transposition) is performed on $Z_1$). The relationship is not limited in this application.

Optionally, for Example 1 to Example 3 in this section, a method for associating the data streams with the corresponding identifiers of the data transmit end may be different from a method for associating the identifiers corresponding to the data streams of the data receive end. For example, the data transmit end uses the method in Example 1, the data receive end uses the method in Example 2, and there is a correspondence between the identifier sequence of the data transmit end and the identifier sequence of the data receive end.

Optionally, Example 1 to Example 3 in this section may be separately performed, or may be performed in combination with the steps in S102. This is not limited in this application.

To implement functions in the method provided in this application, the apparatus or the device provided in this application may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. In this application, division into the modules is an example, and is merely logic function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

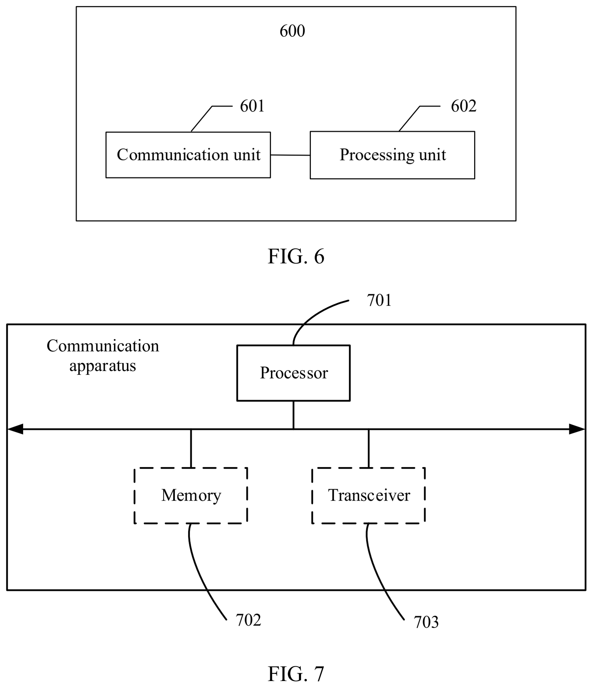

FIG. 6 is a diagram of a communication apparatus according to this application. The apparatus may include modules that perform, in a one-to-one correspondence, the method/operations/steps/actions described in any embodiment shown in FIG. 2 to FIG. 5. The modules may be implemented by a hardware circuit, software, or a combination of a hardware circuit and software.

The apparatus 600 includes a communication unit 601 and a processing unit 602, configured to implement the method performed by each device in the foregoing embodiments. The communication unit 601 is also referred to as a transceiver unit. The transceiver unit includes a sending unit and a receiving unit. The sending unit is configured to send a signal, and the receiving unit is configured to receive a signal.

In a possible implementation, the apparatus is an apparatus or a device of a data transmit end. Specifically, the processing unit is configured to determine one or more data streams, where each data stream corresponds to one or more identifiers. The processing unit is further configured to input the one or more data streams and identifiers corresponding to the one or more data streams into a training unit, to obtain output information, where the training unit includes one or more artificial intelligence AI modules for signal processing in a transmitter machine.

Optionally, the communication unit 601 is configured to send the output information, where the output information is input information of a data receive end.

For specific execution procedures of the communication unit 601 and the processing unit 602 in this implementation, refer to the descriptions of the steps performed by the data transmit end in the foregoing method embodiments and related descriptions. Details are not described herein again. The data processing method implemented by the apparatus may associate data streams with identifiers, so that the data receive end (for example, a receiver machine) can distinguish between different data streams based on the identifiers. In addition, the training unit can distinguish between the different data streams based on different identifiers when performing AI training, so that the data streams can be trained by sharing parameters (for example, reusing a same neural network processing method). This helps improve generalization and scalability of a network.

In a possible implementation, the apparatus is an apparatus or a device of a data receive end. Specifically, the processing unit 602 is configured to determine one or more data streams, where each data stream corresponds to one or more identifiers. The processing unit 602 is further configured to input the one or more data streams and identifiers corresponding to the one or more data streams into a training unit, to obtain output information, where the training unit includes one or more artificial intelligence AI modules for signal processing in a receiver machine.

Optionally, the communication unit 601 is configured to receive the output information, where the output information is output information of the data receive end, and the output information of the data receive end is used by the data receive end and a data transmit end to update respective training units.

For specific execution procedures of the communication unit 601 and the processing unit 602 in this implementation, refer to the descriptions of the steps performed by the data receive end in the foregoing method embodiments and related descriptions. Details are not described herein again. The data processing method implemented by the apparatus may associate received data streams with identifiers, so that the data receive end can distinguish between different data streams based on the identifiers. In addition, the training unit can distinguish between the different data streams based on different identifiers when performing AI training, so that the data streams can be trained by sharing parameters (for example, reusing a same neural network processing method). This helps improve generalization and scalability of a network.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 7 is a diagram of another structure of a communication apparatus according to an embodiment of this application. The communication apparatus may be configured to perform the steps performed by the data transmit end or the data receive end, or the first apparatus or the second apparatus in the foregoing method embodiments. For details, refer to the related descriptions in the foregoing method embodiments.

The communication apparatus includes a processor 701. Optionally, the communication apparatus further includes a memory 702 and a transceiver 703.

In a possible implementation, the processor 701, the memory 702, and the transceiver 703 are separately connected by using a bus, and the memory stores computer instructions.

Optionally, the processing unit 602 in the foregoing embodiment may be specifically the processor 701 in this embodiment. Therefore, specific implementation of the processor 701 is not described again. The communication unit 601 in the foregoing embodiment may be specifically the transceiver 703 in this embodiment. Therefore, specific implementation of the transceiver 703 is not described again.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a nonvolatile memory, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store the program instructions and/or the data.

This application provides another communication apparatus. The device includes a processor and an interface. Optionally, the apparatus further includes a memory. The processor is coupled to the memory, and the processor is configured to read and execute computer instructions stored in the memory, to implement the data processing method in embodiments shown in FIG. 2 to FIG. 5.

An embodiment of this application further provides a communication system. The communication system includes a first apparatus and a second apparatus. The first apparatus is configured to perform all or some of the steps performed by the first apparatus in the foregoing embodiments. The second apparatus is configured to perform all or some of the steps performed by the second apparatus in the foregoing embodiments.

This application provides a computer-readable storage medium. The computer-readable storage medium stores a program or instructions. When the program or the instructions are run on a computer, the computer is enabled to perform the data processing methods in embodiments shown in FIG. 2 to FIG. 5.

This application provides a computer program product. The computer program product includes instructions. When the instructions are run on a computer, the computer is enabled to perform the data processing methods in embodiments shown in FIG. 2 to FIG. 5.

This application provides a chip or a chip system. The chip or the chip system includes at least one processor and an interface. The interface and the at least one processor are interconnected through a line. The at least one processor is configured to run a computer program or instructions, to perform the data processing methods in the embodiments shown in FIG. 2 to FIG. 5.

The interface in the chip may be an input/output interface, a pin, a circuit, or the like.

The chip system may be a system on chip (system on chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, that integrates one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A data processing method, comprising:

   determining one or more data streams, wherein each data stream corresponds to one or more identifiers; and
   inputting the one or more data streams and identifiers corresponding to the one or more data streams into a training unit, to obtain output information, wherein the training unit comprises one or more artificial intelligence AI modules for signal processing in a transmitter machine or a receiver machine.

2. The method according to claim 1, wherein one data stream comprises a plurality of symbols, and each symbol corresponds to one identifier.

3. The method according to claim 1, wherein one data stream comprises a plurality of symbols, and a part or all of the plurality of symbols correspond to one identifier.

4. The method according to claim 2 or 3, wherein different data streams correspond to different identifiers.

5. The method according to any one of claims 1 to 4, wherein the inputting the one or more data streams and the identifiers corresponding to the one or more data streams into the training unit comprises:

   separately concatenating each data stream with a corresponding identifier to obtain a concatenated vector, wherein a dimension of the concatenated vector is determined based on a quantity of data streams and a quantity of symbols of each data stream; and
   inputting the concatenated vector into the training unit.

6. The method according to any one of claims 1 to 4, wherein the inputting the one or more data streams and the identifiers corresponding to the one or more data streams into the training unit comprises:

   separately concatenating each data stream with a corresponding identifier to obtain a concatenated vector, wherein a dimension of the concatenated vector is determined based on a quantity of data streams and a quantity of symbols of each data stream;
   performing dimension increase on the concatenated vector to obtain a high-dimensional vector; and
   inputting the high-dimensional vector into the training unit.

7. The method according to any one of claims 1 to 4, wherein the inputting the one or more data streams and the identifiers corresponding to the one or more data streams into the training unit comprises:

   performing dimension increase on each data stream to obtain a high-dimensional vector, wherein a dimension of the high-dimensional vector is determined based on a quantity of data streams and a quantity of symbols of each data stream; and
   performing a first operation on the high-dimensional vector and the one or more identifiers, and inputting a result of the first operation into the training unit.

8. The method according to any one of claims 1 to 4, wherein the one or more identifiers are determined based on a pseudo-random sequence, and the pseudo-random sequence is related to one or more of a cell identity, a user identifier, and an index of the data stream.

9. The method according to claim 8, wherein the index of the data stream is indicated by using downlink control information.

10. The method according to any one of claims 1 to 4, wherein the one or more identifiers are determined based on a complex sequence or a real sequence, and the complex sequence or the real sequence is determined based on a random sequence and a mapping relationship;

    the mapping relationship comprises a first mapping relationship between a plurality of complex identifiers and a plurality of index values, and/or a second mapping relationship between a plurality of real identifiers and a plurality of index values; and
    the random sequence is determined based on a user identifier and/or an index of the data stream, and a value in the random sequence is an index value in the first mapping relationship and/or an index value in the second mapping relationship.

11. The method according to any one of claims 1 to 4, wherein the one or more identifiers are determined based on a first function relationship, and a parameter of the first function relationship is related to one or more of a quantity of data streams, a maximum quantity of supported streams, a maximum dimension of the identifier, a dimension index of the identifier, and a user identifier.

12. The method according to claim 11, wherein the first function relationship satisfies the following formula:

$$r(l, n_{RNTI}, i) = cos\left(\frac{l}{M^{\frac{i}{d}}} + \left(2\pi \times M^{\frac{i}{d}}\right)\frac{n_{RNTI}}{2^{16}}\right) + j\sin\left(\frac{l}{M^{\frac{i}{d}}} + \left(2\pi \times M^{\frac{i}{d}}\right)\frac{n_{RNTI}}{2^{16}}\right),$$

wherein

$r(l, n_{RNTI}, i)$ comprises the one or more identifiers, $l$ represents the quantity of data streams, d represents the maximum dimension of the identifier, i represents the dimension index of the identifier, $M$ represents the maximum quantity of supported streams, $n_{RNTI}$ represents the user identifier, cos represents a cosine function, and *sin* represents a sine function.

13. The method according to claim 1, wherein the one or more identifiers belong to an identifier sequence of a data transmit end, or the one or more identifiers belong to an identifier sequence of a data receive end; and there is a correspondence between the identifier sequence of the data transmit end and the identifier sequence of the data receive end.

14. The method according to claim 13, wherein the method further comprises:

sending, by the data transmit end, the output information, wherein the output information is input to the data receive end after being transmitted through a channel; or
sending, by the data receive end, the output information, wherein the output information of the data receive end is used by the data receive end and the data transmit end to update respective training units.

15. A communication apparatus, comprising a communication unit and a processing unit, wherein the communication unit and the processing unit are configured to perform the method according to any one of claims 1 to 14.

16. A communication apparatus, comprising a processor and a memory, wherein the memory is configured to store instructions; and when the instructions are executed by the processor, the communication apparatus is enabled to perform the method according to any one of claims 1 to 14.

17. A computer-readable storage medium, wherein the computer-readable storage medium stores instructions; and when the instructions are run on a computer, the computer is enabled to perform the method according to any one of claims 1 to 14.

18. A computer program product, comprising instructions, wherein when the instructions are run on a computer, the computer is enabled to perform the method according to any one of claims 1 to 14.

19. A chip, wherein the chip comprises a processor, or the chip comprises a processor and an interface, and the processor is configured to execute a computer program, so that the chip implements the method according to any one of claims 1 to 14.

20. A chip system, wherein the chip system comprises a processor and an interface; and the processor is configured to execute a computer program, so that the chip system implements the method according to any one of claims 1 to 14.

Network device                Terminal

FIG. 1

| | |
|---|---|
| A first apparatus determines one or more data streams, where each data stream corresponds to one or more identifiers | S101 |
| The first apparatus inputs the one or more data streams and identifiers corresponding to the one or more data streams into a training unit, to obtain output information | S102 |

FIG. 2

**Data transmit end**

One or more identifiers / Transmit data streams — $Z_1$ / X — Concatenating → Training unit of the data transmit end → Output information (for example, transmit symbols)

**Data receive end**

One or more identifiers / Received data streams — $Z_2$ / Y — Concatenating → Training unit of the data receive end → Output information (for example, a log likelihood ratio LLR)

FIG. 3

**Data transmit end**

| One or more identifiers | $Z_1$ |
| Transmit data streams | X |

Concatenating → Dimension increase unit → $X_d$ → Training unit of the data transmit end → Dimension reduction unit → Output information (for example, transmit symbols)

**Data receive end**

| One or more identifiers | $Z_2$ |
| Received data streams | Y |

Concatenating → Dimension increase unit → $Y_d$ → Training unit of the data receive end → Dimension reduction unit → Output information (for example, a log likelihood ratio LLR)

FIG. 4

Data transmit end

One or more identifiers

$Z_1$

Transmit data streams → X → Dimension increase unit → $X_d$ → First operation unit → Training unit of the data transmit end → Dimension reduction unit → Output information (for example, transmit symbols)

Data receive end

One or more identifiers

$Z_2$

Received data streams → Y → Dimension increase unit → $Y_d$ → First operation unit → Training unit of the data receive end → Dimension reduction unit → Output information (for example, a log likelihood ratio LLR)

FIG. 5

600

601

Communication unit

602

Processing unit

FIG. 6

701

Communication apparatus

Processor

Memory

Transceiver

702

703

FIG. 7

## INTERNATIONAL SEARCH REPORT

| International application No. |
| :--- |
| **PCT/CN2023/114717** |

| A. | CLASSIFICATION OF SUBJECT MATTER |
| :-- | :-- |

H04W 28/10(2009.01)i

According to International Patent Classification (IPC) or to both national classification and IPC

| B. | FIELDS SEARCHED |
| :-- | :-- |

Minimum documentation searched (classification system followed by classification symbols)

IPC:H04W28/-

Documentation searched other than minimum documentation to the extent that such documents are included in the fields searched

Electronic data base consulted during the international search (name of data base and, where practicable, search terms used)

CNABS: CNTXT; ENTXTC; CJFD; CNKI: 流, 符号, 标识符, 标签, 标记, 训练, 学习, 人工智能, 神经网络, AI, ML; VEN; ENTXT; USTXT; EPTXT; WOTXT; 3GPP; 百度学术, BAIDU SCHOLAR; IEEE: flow, stream, symbol, ID, identifier, label, mark, learn, train, artificial intelligence, neural network

| C. | DOCUMENTS CONSIDERED TO BE RELEVANT |
| :-- | :-- |

| Category* | Citation of document, with indication, where appropriate, of the relevant passages | Relevant to claim No. |
| :---: | :--- | :---: |
| X | CN 115668218 A (NOKIA TECHNOLOGIES OY) 31 January 2023 (2023-01-31) description, paragraphs 4, 45-52, and 97 | 1-20 |
| A | CN 114009089 A (TELEFONAKTIEBOLAGET LM ERICSSON (PUBL)) 01 February 2022 (2022-02-01) entire document | 1-20 |
| A | CN 114079618 A (HUAWEI TECHNOLOGIES CO., LTD.) 22 February 2022 (2022-02-22) entire document | 1-20 |
| A | US 2019026466 A1 (CROWDSTRIKE, INC.) 24 January 2019 (2019-01-24) entire document | 1-20 |

☐ Further documents are listed in the continuation of Box C.    ☑ See patent family annex.

| * | Special categories of cited documents: |
| :-- | :-- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| :-- | :-- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| :--- | :--- |
| **01 April 2024** | **26 April 2024** |

| Name and mailing address of the ISA/CN | Authorized officer |
| :--- | :--- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/114717**

| Patent document cited in search report | | | Publication date (day/month/year) | Patent family member(s) | | | Publication date (day/month/year) |
|---|---|---|---|---|---|---|---|
| CN | 115668218 | A | 31 January 2023 | WO | 2021234027 | A2 | 25 November 2021 |
| | | | | WO | 2021234027 | A3 | 10 February 2022 |
| | | | | EP | 4154184 | A2 | 29 March 2023 |
| | | | | US | 2023188394 | A1 | 15 June 2023 |
| CN | 114009089 | A | 01 February 2022 | US | 2022255816 | A1 | 11 August 2022 |
| | | | | US | 11902115 | B2 | 13 February 2024 |
| | | | | EP | 3991354 | A1 | 04 May 2022 |
| | | | | WO | 2021001085 | A1 | 07 January 2021 |
| CN | 114079618 | A | 22 February 2022 | WO | 2022033115 | A1 | 17 February 2022 |
| | | | | EP | 4191949 | A1 | 07 June 2023 |
| | | | | US | 2023188424 | A1 | 15 June 2023 |
| | | | | US | 11855846 | B2 | 26 December 2023 |
| | | | | EP | 4191949 | A4 | 31 January 2024 |
| US | 2019026466 | A1 | 24 January 2019 | EP | 3435623 | A1 | 30 January 2019 |
| | | | | EP | 3435623 | B1 | 15 September 2021 |
| | | | | US | 10726128 | B2 | 28 July 2020 |

Form PCT/ISA/210 (patent family annex) (July 2022)